# EUROPEAN PATENT APPLICATION

(11) **EP 1 231 810 A2**
(43) Date of publication of application: **14.08.2002**
(21) Application number: 01303188.5
(22) Date of filing: 04.04.2001
(51) Int. Cl.: H04Q 11/00

(54) **Network management architecture**

(30) Priority: 12.02.2001 US 782595
(71) Applicant: Redfern Broadband Networks Pty Ltd, Eveleigh, New South Wales 1430 (AU); Redfern Broadband Networks Inc., Wilmington, County of Newcastle, Delaware, 19801 (US)
(72) Inventor: Funk, David, Berowra Heights, New South Wales 2082 (AU)
(74) Representative: Driver, Virginia Rozanne

(57) **Abstract**

An optical network element for use in an optical network, the network element including a processing unit capable of running a Unix® operating system and adapted, in use, to effect at least one management function associated with the network element. (Unix® is a registered trade mark of The Open Group.)

## Description

The present invention relates broadly to an optical network, to a method of managing an optical network, and to an optical network element for use in an optical network.

There is a continuing demand for providing more and more user facilities in telecommunications equipment such as an optical network. Those facilities primarily relate to the management of the components within the optical network and the distribution and display of information such as alarm reports, audit logs, alarm logs, and status reports.

Whilst the provision of management facilities is clearly desirable, it does impose further complexity into the setting up of an optical network because of the need to develop and implement the necessary dedicated application programs and protocols.

Presently, it is typical for network management deployment to have central network management servers running Microsoft Windows, or a Unix® operating system. These servers communicate with the network elements such as hubs or in-line amplifiers, which contain less powerful processing units which are less "intelligent".

At least preferred embodiments of the present invention seek to provide an alternative network management system.

Throughout the specification the term Unix® is to be understood to encompass either a genuine Unix® operating system, or an alternative operating system which is sufficiently Unix® -like to be able to run a range of standard Unix® Internet-based protocols and applications with little or no modification. (Unix® is a registered trade mark of The Open Group.)

In accordance with a first aspect of the present invention there is provided an optical network element for use in an optical network, the network element including a processing unit capable of running a Unix® operating system and adapted, in use, to effect at least one management function associated with the network element.

The management function may comprise the distribution of one or more of the group of alarm reports, audit logs, alarm logs, status reports and control messages.

Preferably, the processing unit includes a mass storage device for storing the Unix® operating system and associated files and utilities, as well as one or more network management application programs, protocol implementations and kernel modules adapted to operate on the Unix® operating system. The application programs may comprise one or more of the group of an electronic mail application, and a web server application. The protocol implementations may comprise one or more of the group of a secure shell (SSH) implementation, a Common Object Request Broker Architecture (CORBA) implementation, a Simple Network Management Protocol (SNMP) implementation, a Multi-Protocol Label Switching (MPLS) implementation and a Multi-Protocol *Lambda* Switching (MPλS) implementation. The kernel modules may comprise Internet firewall kernel modules.

Preferably, the processing unit further includes an interface to a system interconnect bus within the network element, via which it is able to obtain real-time information regarding the components comprising the network element for distribution in alarm reports, audit logs, alarm logs and status reports, and via which it is also able to control the operation of the components comprising the network element in accordance with control messages received.

Preferably, the processing unit further includes an interface to external network operator and/or network subscriber networks, via which network operators and/or subscribers are able to monitor alarm reports, audit logs, alarm logs and status reports, and via which network operators and/or subscribers are able to issue control messages.

Preferably, the network element further comprises interfaces to a network management channel of the optical network, via which management messages such as alarm reports, audit logs, alarm logs, status reports and control messages may be communicated between network elements. The processing unit may be connected to the network management channel interfaces via the system interconnect bus.

The network element may comprise a network node or an in-line amplifier.

In accordance with a second aspect of the present invention there is provided an optical network including a plurality of network elements, each network element including a processing unit capable of running a Unix® operating system and adapted, in use. to effect at least one management function associated with the network element.

The management function may comprise the distribution of one or more of the group of alarm reports, audit logs, alarm logs, status reports and control messages.

Preferably, the processing unit includes a mass storage device for storing the Unix® operating system and associated files and utilities, as well as one or more network management application programs, protocol implementations and kernel modules adapted to operate on the Unix® operating system. The application programs may comprise one or more of the group of an electronic mail application, and a web server application. The protocol implementations may comprise one or more of the group of an SSH implementation, a CORBA implementation, an SNMP implementation, an MPLS implementation and an MPλS implementation. The kernel modules may comprise Internet firewall kernel modules.

Preferably, the processing unit further includes an interface to a system interconnect bus within the network element, via which it is able to obtain real-time information regarding the components comprising the network element for distribution in alarm reports, audit logs, alarm logs and status reports, and via which it is also able to control the operation of the components comprising the network element in accordance with control messages received.

Preferably, the processing unit further includes an interface to external network operator and/or network subscriber networks, via which network operators and/or subscribers are able to monitor alarm reports, audit logs, alarm logs and status reports, and via which network operators and/or subscribers are able to issue control messages.

Preferably, the network element further comprises interfaces to a network management channel of the optical network, via which management messages such as alarm reports, audit logs, alarm logs, status reports and control messages may be communicated between network elements. The processing unit may be connected to the network management channel interfaces via the system interconnect bus.

The network element may comprise a network node or an in-line amplifier.

In accordance with a third aspect of the present invention, there is provided a method of managing an optical network, the method comprising transmitting management data directly between processing units located at individual network elements of the optical network, wherein the management data is processed within each processing unit on a Unix® operating system.

The management data may comprise data associated with alarm reports, audit logs. alarm logs, status reports and control messages.

Preferably, the management data is processed utilising one or more network management application programs, protocol implementations and kernel modules adapted to operate on the Unix® operating system. The application programs may comprise one or more of the group of an electronic mail application, and a web server application. The protocol implementations may comprise one or more of the group of an SSH implementation, a CORBA implementation, an SNMP implementation, an MPLS implementation and an MPλS implementation. The kernel modules may comprise Internet firewall kernel modules.

Preferred forms of the present invention will now be described, by way of example only, with reference to the accompanying drawings.
Figure 1 is a schematic diagram illustrating the functional modules of a metro hub embodying the present invention.
Figure 2 is a block diagram illustrating the configuration of the line interface card, channel switch and trunk interface card modules of Figure 1.
Figure 3 is a schematic drawing illustrating the logical connections to, from, and within the CWDM module of Figure 1.
Figure 4 is a block diagram illustrating in more detail the functional components of the management processing unit module of Figure 1.
Figure 5 is a schematic diagram illustrating an optical network embodying the present invention.
Figure 6 is a block diagram illustrating the main functional components within a bi-directional optical amplifier embodying the present invention.
Figure 7 is a schematic diagram illustrating the connectivity of a management network embodying the present invention.
Figure 8 is a schematic diagram illustrating an optical network with two different subscribers embodying the present invention.
Figure 9 is a schematic diagram illustrating an optical network with two different subscribers, comprising separate IP firewall protection for each subscriber according to the prior art.
Figure 10 is a schematic diagram illustrating an optical network in which subscriber management data is encrypted for security embodying the present invention.

In the preferred embodiment described an optical network element is provided which includes a processing unit capable of running a Unix® operating system and adapted to effect at least one management function associated with the network element, such as distribution of alarm reports, audit logs, alarm logs, status reports and control messages associated with the network element.

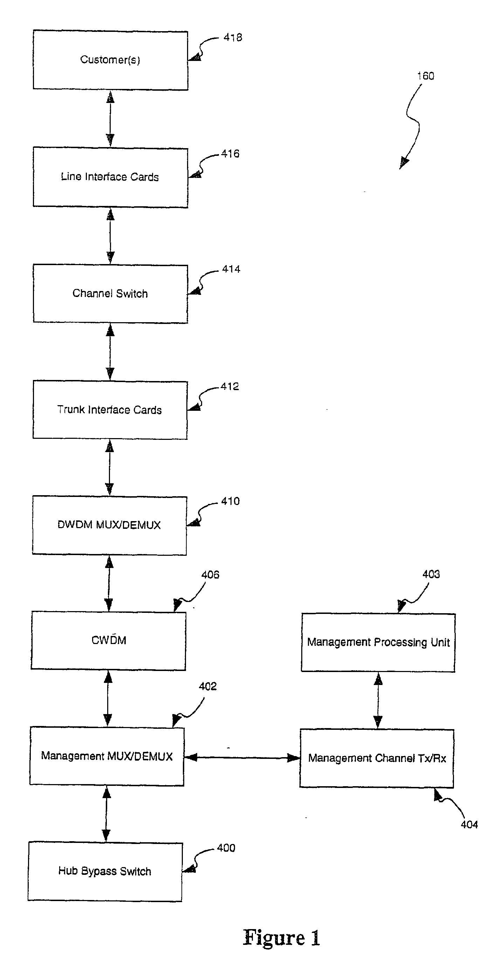

Figure 1 is a block diagram that shows schematically the major units that comprise an optical network hub embodiment 160 for use in an optical network. Figure 1 shows the logical layout for the different units the optical signal passes through. Each of these units is discussed in greater detail in the following paragraphs.

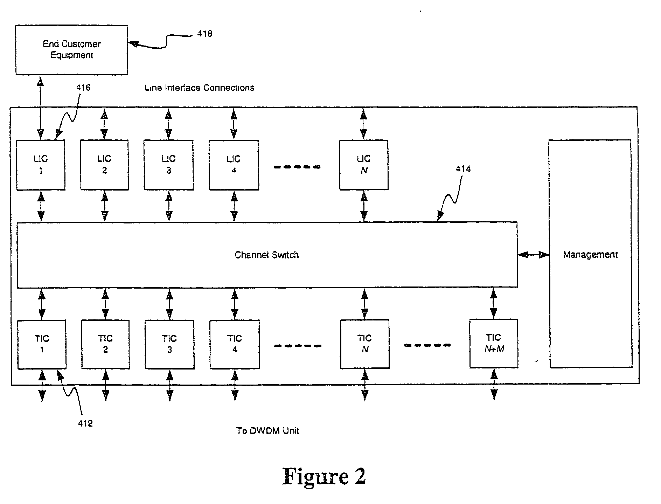

Figure 2 is a block diagram that shows schematically the configuration of the Line Interface Cards 416, Channel Switch 414 and Trunk Interface cards 412 in the metro hub embodiment 160. Each Line Interface Card 416 provides a duplex connection to a Customer Equipment Unit 418, and is connected to a single Trunk Interface Card 412 according to the configuration of the Channel Switch 414. In the hub configuration shown in Figure 2, the hub is capable of providing M:N channel protection, in which M+N Trunk Interface Cards 412 are provided to connect only N Line Interface Cards 416. Thus up to M trunk failures can be restored by switching the corresponding Line Interface Cards 416 to an unused Trunk Interface Card 412 by reconfiguring the Channel Switch 414.

Each Trunk Interface Card 412 requires a suitable single-frequency DWDM laser for transmission of the trunk signal into the network via the DWDM MUX/DEMUX Unit 410, the CWDM Unit 406, the Management MUX/DEMUX Unit 402 and the Hub Bypass Switch 400. Depending upon factors such as, e.g., the channel bit-rate and the maximum transmission distance, this laser may be a relatively low-cost device, such as a directly modulated. temperature-stabilised distributed feedback (DFB) semiconductor laser. Alternatively the laser may be a more costly, higher-performance device, such as a DFB semiconductor laser incorporating an integrated external electro-absorption modulator (DFB-EA), and active wavelength stabilisation, in order to achieve higher bit-rate, longer transmission distance, or more closely spaced DWDM channels. In a further alternative embodiment, the DWDM laser source may be provided separately from the modulator.

As shown in Figure 2, each Trunk Interface Card 412 is connected by a pair of fibres to the DWDM MUX/DEMUX Unit. Each fibre connecting a Trunk Interface Card 412 to the DWDM Unit 410 (Figure 1) carries a single wavelength in one direction. In the exemplary embodiment described here, half of these wavelengths will carry data transmitted from the hub and half will carry data to be received at the hub, however it will be appreciated by persons skilled in the art that hub configurations are possible in which asymmetric transmission is provided. In the exemplary embodiment there are 16 full-duplex channels at each hub comprising 16 transmitted (Tx) wavelengths and 16 received (Rx) wavelengths, i.e. a total of 32 different wavelengths. However, it will be appreciated that a greater or smaller number of channels could be accommodated without departure from the scope of the present invention. The DWDM Unit 410 (Figure 1) receives the 16 Tx channels from the Trunk Interface Cards 412 and multiplexes them onto a single fibre. It also receives the 16 Rx channels on a single fibre from the CWDM Unit 406 (Figure 1) and demultiplexes them to the 16 Rx fibres connected to the Trunk Interface Cards 412.

Advantageously, the hub may comprise additional Trunk Interface Cards 412 to provide a number of protection channels per direction. In this configuration, M:N channel protection is supported, where N = 16 for the exemplary embodiment, and M is the number of additional Trunk Interface Cards 412 provided.

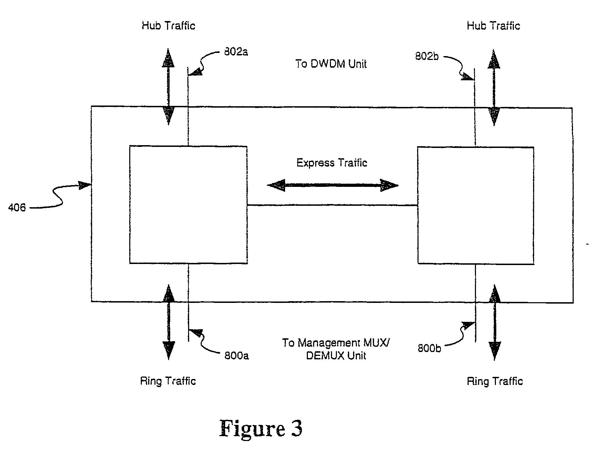

The CWDM Unit 406 (Figure 1) adds/drops the appropriate wavelength blocks for the hub and passes all other express traffic by the hub. Figure 3 shows schematically the logical connections to, from and within the CWDM Unit 406. The CWDM Unit 406 has two trunk fibre connections 800*a*, 800*b* to the optical fibre ring via the Management MUX/DEMUX 402 (Figure 1) and the Hub Bypass Switch 400 (Figure 1). These two trunk fibres 800a, 800b correspond to the two directions around the ring. Note that signals propagate bi-directionally on each of these fibres 800a, 800b, and that one direction around the ring corresponds to a primary path, and the other to a secondary path to provide protection. Therefore in a minimal configuration, only one transmission fibre is required between each pair of adjacent hubs. The network is therefore able to provide bi-directional transmission and protection on a ring comprising single fibre connections.

The CWDM Unit 406 also has two fibre connections 802*a*, 802*b* to the DWDM MUX/DEMUX Unit 410 (Figure 1). One function of the CWDM Unit 406 is to demultiplex blocks of wavelengths received on the trunk fibre connections 800*a*, 800*b* and transfer them to the hub via the fibre connections 802*a*, 802*b*. A second function of the CWDM Unit 406 is to accept blocks of wavelengths transmitted by the hub via the fibre connections 802*a*, 802*b* and multiplex them onto the trunk fibre connections 800*a*, 800*b*. A third function of the CWDM Unit 406 is to pass all trunk wavelengths received on the trunk fibre connections 800*a*, 800*b* which are not demultiplexed at the hub across to the opposite trunk fibre connection 800*b*, 800*a* via the Express Traffic path 804. Advantageously, the CWDM Unit 406 should provide high isolation, i.e. signals destined for the hub traffic fibres 802*a*, 802*b* should not appear in the Express Traffic path 804 and vice versa, and should have low insertion loss, i.e. ring traffic passing between the trunk fibres 800*a*, 800*b* via the Express Traffic path 804 should experience minimum attenuation.

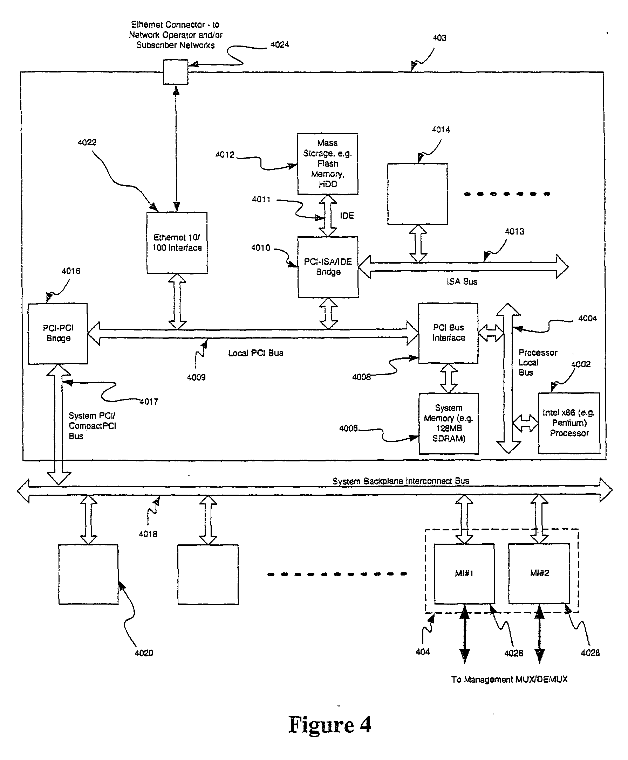

Management information is transmitted between network elements using a dedicated optical channel at a nominal wavelength of 1510 nm. The Management MUX/DEMUX 402 (Figure 1) multiplexes and demultiplexes the management channels with the DWDM trunk channels via optical multiplexing and demultiplexing means. The Management Channel Tx/Rx 404 (Figure 1) transmits and receives the management data. The management processing unit 403 executes the required processing of the management data, and the control to effect the management functions and features through suitable interfaces with the various components of the optical network hub 160. The connections (not all shown in Figures 1 and 2) between the management processing unit 403 and the components within the hub 160, such as e.g. the Management Channel Tx/Rx 404, the Interface Cards 412, 416 and the Channel Switch 414, are effected via a backplane interface bus within the hub 160, as described below with reference to Figure 4.

The Hub Bypass Switch 400 (Figure 1) physically connects the ring to the hub and is also used to switch the hub out of the ring while still passing ring traffic.

Figure 4 shows a block diagram illustrating in more detail the main functional components of an exemplary management processing unit 403 (Figure 1). The exemplary management processing unit 403 has an architecture compatible with an IBM-PC type computer, however it will be appreciated by persons skilled in the art that other equivalent platforms capable of running a Unix® operating system may be employed. The main components of the management processing unit 403 are:
- a processor 4002, such as e.g. a Pentium-class Intel x86 microprocessor, capable of running a Unix® operating system.
- random access memory 4006, such as e.g. a 128 MB synchronous dynamic random access memory (SDRAM) module, for volatile storage of e.g. the programs and data associated with the running Unix® system software and application programs.
- a PCI bus interface module, such as e.g. the Intel 430TX chipset, to interface the microprocessor local bus 4004 to the management processing unit's internal PCI bus 4009.
- a PCI-to-ISA/IDE interface module, such as e.g. the Intel South Bridge PIIX4, to interface the local PCI bus 4009 to ISA bus 4013 peripherals, e.g. 4014, and IDE 4011 peripherals, e.g. the mass storage device 4012.
- a non-volatile mass storage device 4012 such as a hard-disk drive (HDD) or flash memory module, for storing the Unix® operating system and associated files and utilities, as well as one or more network management application programs, protocol implementations and kernel modules adapted to operate on the Unix® operating system.
- a PCI-to-PCI bridge module, such as e.g. the Intel 21154 Transparent PCI-PCI Bridge chip, that interfaces the local PCI bus 4009 to a system PCI or CompactPCI bus 4017, that connects to the network element's system backplane bus to which the managed components e.g. 4020 comprising the network element are connected.
- at least one local area network interface module 4022, such as e.g. an Ethernet 10/100 Mb/s network interface.
- a local area network connector 4024, such as e.g. an Ethernet local area network connector, to which a network operator and/or network subscribers may connect to enable them to manage components of the network via management terminals connected to said local area network (not shown in Figure 4).

Additional local area network interfaces and connectors may be provided either for redundancy, or to provide additional connection ports for further network operator and/or subscriber networks.

The managed components e.g. 4020 may comprise Trunk Interface Cards 412, Channel Switches 414 and Line Interface Cards 416. It will be appreciated by persons skilled in the art that the managed components may comprise other components of a network element capable of communicating via the system backplane interconnect bus 4018, such as optical amplifier modules, and that these examples are illustrative not restrictive.

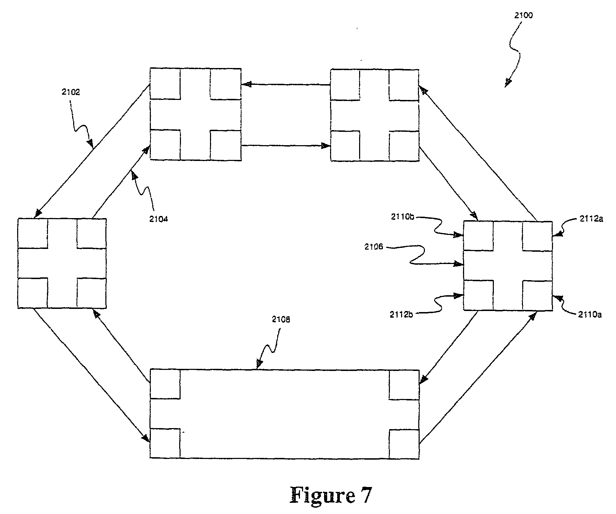

The management processing unit 403 in this embodiment is connected via the system backplane interconnect bus 4018 to Management Channel Interface Units 4026, 4028, which together comprise the Management Channel Tx/Rx Unit 404. In the exemplary embodiment, each Management Channel Interface Unit 4026, 4028 provides a full duplex management channel connection to one adjacent network element, as described below with reference to Figure 7.

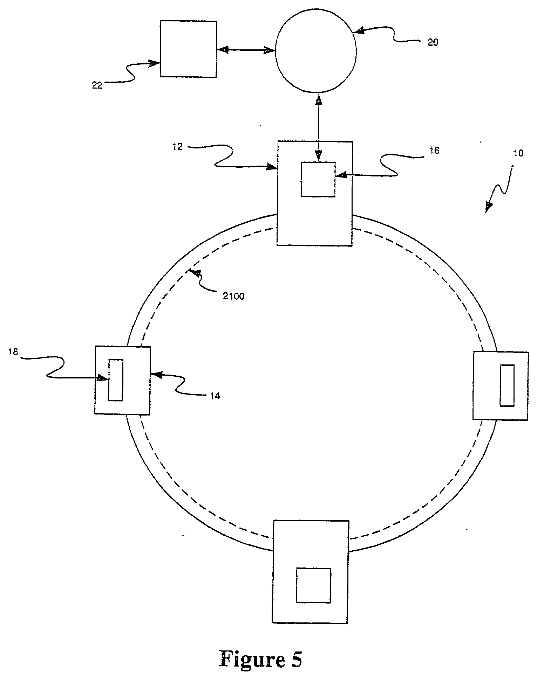

In Figure 5, an optical network in the form of a ring network 10 comprises a plurality of network elements, including a network hub 12 which interfaces to subscribers of the ring network 10, and an in-line amplifier 14.

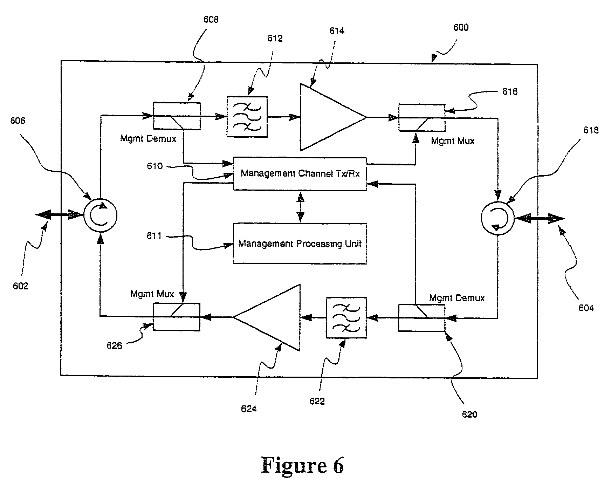

The network hub 12 and amplifier unit 14 incorporate management processing units 16, 18 respectively. The management processing units 16, 18 are of the type described above with reference to Figure 4 in relation to an exemplary metro hub 160 (Figure 1). However, it will be appreciated by a person skilled in the art that the structure of the amplifier unit 14 is somewhat different from that of the metro hub 160 (Figure 1). Figure 6 shows a block diagram illustrating the main functional components within an exemplary amplifier unit e.g. 14.

Figure 6 illustrates a managed bi-directional optical amplifier unit 600. Signals entering the bi-directional amplifier unit 600 from the left-hand fibre 602 are passed by a first circulator 606 to the upper path in which they first enter a first Management Channel Demultiplexer 608. The first Management Channel Demultiplexer 608 splits out the management channel to the Management Channel Tx/Rx Unit 610, while allowing all user data carrying channels to pass through. The data channels then enter a first band-pass filter 612 that is designed to reject all signals outside the wavelength band(s) occupied by the data channels. The data channels then pass through a first optical amplifier 614, such as e.g. an Erbium Doped Fibre Amplifier (EDFA). The outgoing left-to-right management channel transmitted by the Management Channel Tx/Rx 610 is then multiplexed with the data channels in a first Management Channel Multiplexer 616. All signals are then passed to a second circulator 618 from which they are transmitted into the network via the right hand fibre 604.

Signals entering the bi-directional amplifier unit 600 from the right-hand fibre 604 are passed by the second circulator 618 to the lower path in which they first enter a second Management Channel Demultiplexer 620. The second Management Channel Demultiplexer 620 splits out the management channel to the Management Channel Tx/Rx Unit 610, while allowing all user data carrying channels to pass through. The data channels then enter a second band-pass filter 622 that is designed to reject all signals outside the wavelength band(s) occupied by the data channels. The data channels then pass through a second optical amplifier 624, such as e.g. an Erbium Doped Fibre Amplifier (EDFA). The outgoing right-to-left management channel transmitted by the Management Channel Tx/Rx 610 is then multiplexed with the data channels in the second Management Channel Multiplexer 626. All signals are then passed to the first circulator 606 from which they are transmitted into the network via the left hand fibre 602.

Advantageously, if the signals propagating in opposing directions occupy different wavelength bands then the bandpass filters 612, 622 ensure that light cannot circulate within the bi-directional amplifier unit 600 causing degradation of performance and parasitic lasing due to e.g. network faults such as fibre breaks causing reflections on either side of the amplifier.

The Management Channel Tx/Rx 610 transmits and receives the management data in both directions. The management processing unit 611 executes the required processing of the management data, and the control to effect the management functions and features through suitable interfaces with the various components of the bi-directional amplifier unit 600. The connections (not all shown in Figure 6) between the management processing unit 611 and the components within the bi-directional amplifier unit 600, such as e.g. the management channel Tx/Rx 610 and the amplifiers 614, 624, are effected via a backplane interface bus within the hub 160, as described above in reference to Figure 4.

In the ring network 10 shown in Figure 5, management functions and features can be deployed and implemented directly between the respective processing units e.g. 16, 18, all of which run a Unix® operating system. Accordingly, management features available through applications running on Unix® operation systems can immediately be deployed into the optical ring network 10, without the need to customise such programs to less intelligent network elements, i.e. network elements with less powerful processors not capable of a running Unix® operating system. Further, since an Internet standard TCP/IP communications protocol stack forms an integral part of any Unix® operating system, all management communications may be effected using standard Internet communications protocols, without the need to develop proprietary management channel communications protocols.

In the ring network 10 shown in Figure 5, the management processing units, e.g. 16, each comprise a local area network interface 4022, 4024, as described above with respect to Figure 4. Accordingly, a local area network 20 operated by either the operator of the optical network 10, or by a subscriber of the optical network 10, can be connected to the management processing units, e.g. 16. Accordingly, the management processing units, e.g. 16, can communicate with computers on the operator or subscriber local area network 20 using standard Internet communications protocols. Thus a computer 22 connected to the local area network 20 may, by running suitable network management protocol implementations and applications programs, be used as a Management Terminal to effect management functions within the optical network 10.

Management of network elements within the ring network 10 that are not directly connected to the local area network 20 such as, e.g. the amplifier unit 14, is implemented by utilising a Management Network 2100 which overlays the physical and logical topology of the data communication network. The management network comprises point-to-point links in both directions around the ring network 10, effected via the Management Channel Tx/Rx Units, e.g. 404, 610, within each Managed Network Element, e.g. 12, 14. The management network enables all Managed Network Elements within the network to be monitored and/or controlled from a Management Terminal e.g. 22.

The logical connectivity of the Management Network 2100 is shown in Figure 7. The Management Network 2100 comprises two logical channels counter-propagating within the network. The use of two counter-propagating channels ensures that communication of management information between any pair of network elements is not interrupted in the case of any single failure such as e.g. a fibre cut. Each counter-propagating channel consists of a set of point-to-point links, e.g. 2102, 2104, connecting adjacent managed network elements, e.g. 2106. Thus each managed network element 2106 comprises two management receivers 2110*a*, 2110*b* and two management transmitters 2112*a*, 2112*b*. Some terminal equipment, e.g. a Core Hub 2108, may contain multiple managed network elements, in which case the connectivity between these elements may be effected internally, such that the terminal equipment still has only two sets of management transmitters and receivers.

Within each managed network element e.g. 2106, the management signals are multiplexed and demultiplexed with the data signals on each fibre by e.g. the Management MUX/DEMUX Units 402 (Figure 1), or the Management MUX/DEMUX units 62 (Figure 6).

Advantageously, since the management channel connections e.g. 2102, 2104, are established between adjacent managed network elements, they are fully regenerated at each Managed Network Element, and do not require optical amplification.

The management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

In order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

The management channel may comprise relatively low bit-rate signals, e.g. around 100 Mb/s, so that dispersion and power budget for the management signals do not restrict the maximum distance between Managed Network Elements.

The transmission format of the management signals may comprise local-area network standards, e.g. full-duplex 100 Mb/s Fast Ethernet, so that the management channel connections may be implemented using low-cost commodity hardware.

Advantageously, the Management MUX/DEMUX units e.g. 402 (Figure 1), 608, 616, 620, 626 (Figure 6) should present minimal insertion loss to non-management channels, in order to maximise the power budget available for data signal transmission. The Management MUX/DEMUX units may comprise e.g. thin-film filters.

Management of the optical network 10 is effected from a Management Terminal e.g. 22 using standard network management protocols transported over TCP/IP communications protocols. For example, the Management Terminal may currently use CORBA or SNMP based applications in order to manage the network using CORBA or SNMP protocols. Since the Management Processing Units, e.g. 16, 18, are running a Unix® operating system, suitable implementations of these protocols are readily available, and they may be deployed within the Managed Network Elements e.g. 12. 14 with minimal development effort. Furthermore, new management protocols, such as e.g. MPLS and MPλS, are likely to be implemented first on a Unix® operating system, in accordance with the normal development and standardisation procedures of the Internet Engineering Task Force (IETF). Accordingly, as new management protocols emerge it will be possible to deploy them more rapidly and with less development effort using a Unix®-based Management Processing Unit than if a different operating system was employed. Since this rapid adoption of management protocols is a key benefit of the use of a Unix®-based Management Processing Unit, the protocols listed above are to be considered illustrative and not restrictive.

Additionally, since the Management Processing Units e.g. 16, 18, are running a Unix® operating system, they are able to run readily available Internet-based applications such as e.g. a web server (HTTP) or an email server (SMTP) application. Accordingly, the Management Terminal e.g. 22 may be used to access the management features of the Managed Network Elements e.g. 12, 14 via e.g. a web browser, and to receive management information such as status reports and alarm logs via email messages sent from the Managed Network Elements e.g. 16, 18.

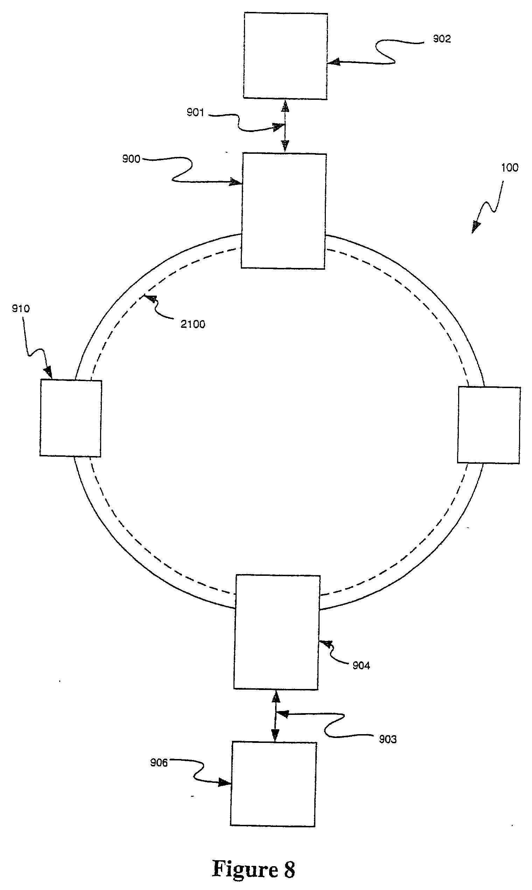

Figure 8 illustrates a ring network 100 in which two different subscribers 902, 906 have management connections to the network via the local area network interfaces 901, 903 on two separate Managed Network Elements 900, 904. The subscribers 902, 906 are able to manage those resources in the network 100 that are associated with their own network connections, however the Management Processing Units (not shown) in all other Managed Network Elements e.g. 910 will prohibit each subscriber from accessing resources reserved for other subscribers. The subscribers communicate with the Managed Network Elements e.g. 900, 904 via the local area network interfaces 901, 903, and the management network 2100 using Internet communications protocols. Accordingly, since both subscribers are connected to the same Internet Protocol network, i.e. 2100, it is in principle possible for one subscriber to access equipment connected to the other subscriber's local area network. This is obviously undesirable.

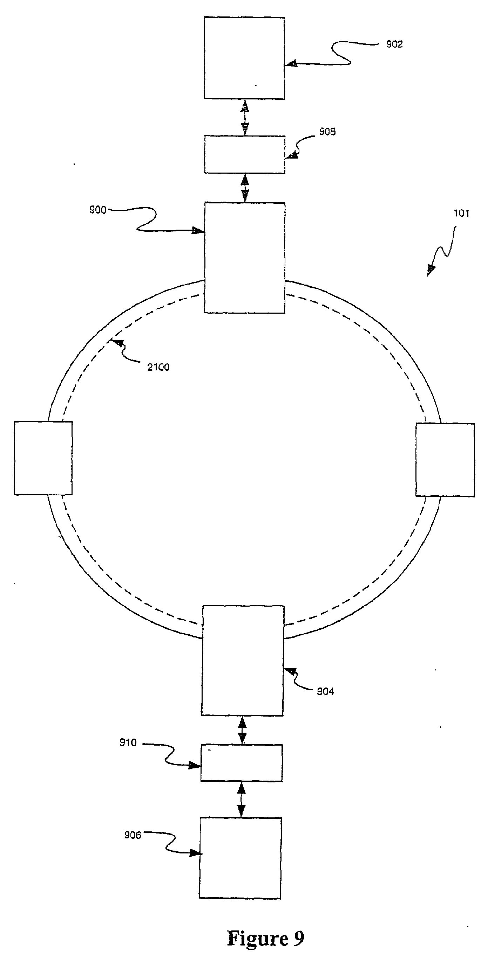

Figure 9 illustrates a typical solution to this problem found in the prior art. Each subscriber has now been provided with an IP Firewall Unit 908, 910 which blocks undesired communications from entering the subscriber's local area network. The IP Firewall Unit e.g. 908 typically comprises a dedicated computer, or Internet router, and therefore represents an additional expense incurred by either the subscriber, or the network operator. However, if in accordance with the present invention the Managed Network Elements 900, 904 each comprise a Management Processing Unit 403 (Figure 1) running a Unix® operating system, it is possible to implement the IP Firewall function directly within the Managed Network Elements 900, 904. IP Firewall functionality is typically available in Unix® operating system implementations as either an integral feature of the Internet protocol stack implementation, or as an optional feature in the form of an operating system kernel module and/or associated applications. Accordingly, a system is provided whereby a network operator is able to allow individual subscribers e.g. 904, 906 to simultaneously manage their part of the optical network 101, while at the same time providing a guarantee to each subscriber e.g. 904 that their network is secure from intrusion by other subscribers e.g. 906 without the need to provide a separate IP Firewall Unit e.g. 908.

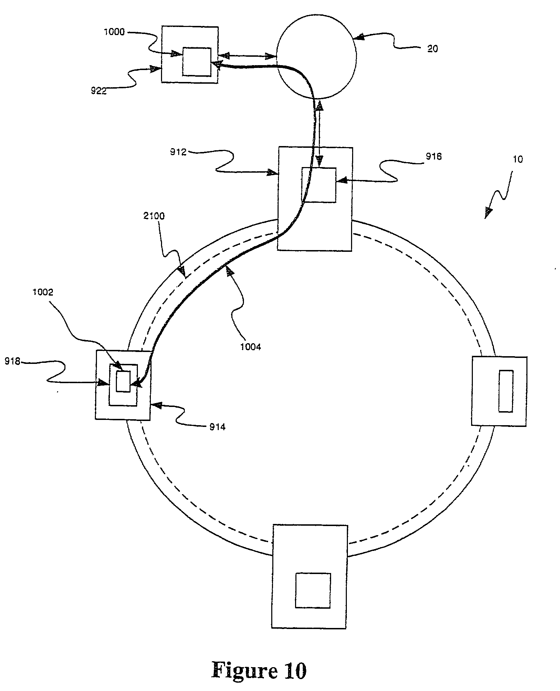

Subscribers who require additional security for their management channel communications may achieve this by using encryption for their management data. A means for providing encrypted communication is illustrated in Figure 10. The subscriber Management Terminal 922 comprises a computer system running a Secure Shell (SSH) application 1000. SSH is a standard Internet-based application that is available for a number of different operating systems including Unix®. A corresponding SSH application 1002 is deployed in the Management Processing Unit 918 of the Managed Network Element 914. An SSH tunnel 1004 is established between the two SSH applications 1000, 1002, which comprises a logical connection between the two SSH applications 1000, 1002 over which all data is encrypted. The management data is then sent over this logical connection in a manner that is transparent to the management applications and protocols. Accordingly, the present invention provides a system in which secure management communications can be implemented with little or no additional development effort.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or necessary implication, the word "comprising" is used in the sense of "including", i.e. the feature specified may be associated with further features in various embodiments of the invention.

## Claims

1. An optical network element for use in an optical network, the network element including a processing unit capable of running a Unix® operating system and adapted, in use, to effect at least one management function associated with the network element.

2. An optical network element as claimed in claim 1, wherein the management function comprises the distribution of one or more of the group of alarm reports, audit logs, alarm logs, status reports and control messages.

3. An optical network element as claimed in claim 1, wherein the processing unit includes a mass storage device for storing the Unix® operating system and associated files and utilities.

4. An optical network element as claimed in claim 3, further including one or more network management application programs, protocol implementations and kernel modules adapted to operate on the Unix® operating system.

5. An optical network element as claimed in claim 4, wherein the application programs comprises one or more of the group of an electronic mail application, and a web server application.

6. An optical network element as claimed in claim 4, wherein the protocol implementations comprise one or more of the group of a Common Object Request Broker Architecture (CORBA) implementation, a Simple Network Management Protocol (SNMP) implementation, a Multi-Protocol Label Switching (MPLS) implementation and a Multi-Protocol *Lambda* Switching (MPλS) implementation.

7. An optical network element as claimed in claim 4, wherein the kernel modules comprise Internet firewall kernel modules.

8. An optical network element as claimed in claim 1, wherein the processing unit further includes an interface to a system interconnect bus within the network element, via which it is able to obtain real-time information regarding the components comprising the network element for distribution in alarm reports, audit logs, alarm logs and status reports, and via which it is also able to control the operation of the components comprising the network element in accordance with control messages received.

9. An optical network element as claimed in claim 1, wherein the processing unit further includes an interface to external network operator and/or network subscriber networks, via which network operators and/or subscribers are able to monitor alarm reports, audit logs, alarm logs and status reports, and via which network operators and/or subscribers are able to issue control messages.

10. An optical network element as claimed in claim 1, wherein the network element comprises a network node or an in-line amplifier.

11. An optical network including a plurality of network elements, each network element including a processing unit capable of running a Unix® operating system and adapted, in use, to effect at least one management function associated with the network element.

12. An optical network as claimed in claim 11, wherein the management function comprises the distribution of one or more of the group of alarm reports, audit logs, alarm logs, status reports and control messages.

13. A method of managing an optical network, the method comprising transmitting management data directly between processing units located at individual network elements of the optical network, wherein the management data is processed within each processing unit on a Unix® operating system.

14. A method as claimed in claim 13, wherein the management data comprises data associated with alarm reports, audit logs, alarm logs, status reports and control messages.

15. A method as claimed in claim 13, wherein the management data is processed utilising one or more network management application programs, protocol implementations and kernel modules adapted to operate on the Unix® operating system.

16. A method as claimed in claim 14, wherein the application programs comprise one or more of the group of an electronic mail application, and a web server application.

17. A method as claimed in claim 14, wherein the protocol implementations comprises one or more of the group of an SSH implementation, a CORBA implementation, an SNMP implementation, an MPLS implementation and an MPλS implementation.

18. A method as claimed in claim 14, wherein the kernel modules comprises Internet firewall kernel modules.
